# EUROPÄISCHE PATENTANMELDUNG

(11) **EP 2 055 991 A1**
(43) Veröffentlichungstag der Anmeldung: **06.05.2009**
(21) Anmeldenummer: 09001869.8
(22) Anmeldetag: 02.04.2004
(51) Int. Cl.: F16H 45/02

(54) **Torsionsschwingungsdämpfer für Drehmomentwandler**

(30) Priorität: 05.04.2003 DE 10315567; 28.10.2003 DE 10350297; 16.12.2003 DE 10358901
(62) Teilanmeldung aus: 04008035.0
(71) Anmelder: ZF Sachs AG, 97419 Schweinfurt (DE)
(72) Erfinder: Sasse, Christoph, 97422 Schweinfurt (DE); Sudau, Jörg, 97464 Niederwerrn (DE); Rönnebeck, Ralf, 97453 Schonungen (DE); Ackermann, Jürgen, 86875 Waal (DE); Frey, Peter, 97447 Gerolzhofen (DE); Wack, Erwin, 97464 Niederwerrn (DE); Zerner, Frank, 97421 Schweinfurt (DE)

(57) **Zusammenfassung**

Ein Torsionsschwingungsdämpfer (80) an einer Überbrückungskupplung (48) einer hydrodynamischen Kupplungsanordnung (1) ist mit einer antriebsseitigen Koppelvorrichtung (96) ausgebildet, die mit dem Kupplungsgehäuse (5) in Wirkverbindung bringbar und mit einem antriebsseitigen Übertragungselement (78) sowie mit ersten Energiespeichern (86) versehen ist, und mit einer abtriebsseitigen Koppelvorrichtung (108), die mit zweiten Energiespeichern (100) und mit einem abtriebsseitigen Übertragungselement (106) versehen ist, das mit einem abtriebsseitigen Bauteil der hydrodynamischen Kupplungsanordnung verbunden ist. Das antriebsseitige Übertragungselement ist über die ersten Energiespeicher mit einem Zwischen-Übertragungselement (94) verbunden, das über die zweiten Energiespeicher an dem abtriebsseitigen Übertragungselement angreift.

## Beschreibung

Die Erfindung bezieht sich auf einen Torsionsschwingungsdämpfer an einer Überbrückungskupplung einer hydrodynamischen Kupplungsanordnung entsprechend dem Oberbegriff des Anspruches 1.

Ein solcher Torsionsschwingungsdämpfer ist beispielsweise aus der DE 43 33 562 A1, Fig. 4 bekannt. Die hydrodynamische Kupplungsanordnung, als Drehmomentwandler realisiert, ist in einem Kupplungsgehäuse mit einer Überbrückungskupplung und mit einem Torsionsschwingungsdämpfer ausgebildet, welche einen ein Pumpenrad, ein Turbinenrad und sowie ein Leitrad aufweisenden hydrodynamischen Kreis ergänzen. Der Torsionsschwingungsdämpfer verfügt über zwei mit Radialversatz zueinander angeordnete Koppelvorrichtungen, die jeweils mit Energiespeichern versehen sind. Bei der antriebsseitigen Koppelvorrichtung bildet das Kupplungsgehäuse ein antriebsseitiges Übertragungselement, das zur Beaufschlagung der ersten Energiespeicher dient, die sich an einer radial äußeren Nabenscheibe abstützen. An dem Turbinenrad ist ein Aufnahmeelement befestigt, das über eine Nietverbindung drehfest mit Deckblechen ist, die ihrerseits drehfest mit einem Kolben der Überbrückungskupplung sind, und zur Beaufschlagung der zweiten Energiespeicher dienen. Die zweiten Energiespeicher stützen sich an einer als abtriebsseitiges Übertragungselement dienenden, radial inneren Nabenscheibe ab, die, beispielsweise über eine Turbinenradnabe, mit einem abtriebsseitigen Bauteil der hydrodynamischen Kupplungsanordnung, wie einer Getriebeeingangswelle, verbunden ist.

Charakteristisch bei dem bekannten Torsionsschwingungsdämpfer ist, dass die radial äußere Nabenscheibe beidseits über Reibflächen verfügt, von denen die eine zur Anlage einer Reibfläche des Kolbens vorgesehen ist, und die andere zur Abstützung am Aufnahmeelement des Turbinenrades und damit am Turbinenrad selbst dient. Aufgrund dieser konstruktiven Ausgestaltung sind die beiden Koppelvorrichtungen ausschließlich in der Einrückposition des Kolbens untereinander verbunden, da nur dann die radial äußere Nabenscheibe zwischen dem Kolben und dem Aufnahmeelement des Turbinenrades reibschlüssig eingespannt ist, und Bewegungen, die sie von den ersten Energiespeichern aufgenommen hat, an das Aufnahmeelement und damit einerseits an die zweiten Energiespeicher, andererseits aber auch an das als Masseelement wirksame Turbinenrad weiterleiten kann. Bei in Ausrückposition stehendem Kolben besteht dagegen keine Verbindung zwischen der radial äußeren Nabenscheibe und dem Aufnahmeelement, und damit zwischen den beiden Koppelvorrichtungen.

Aufgrund der fehlenden dauerhaften Verbindung der beiden Koppelvorrichtungen untereinander ist der bekannte Torsionsschwingungsdämpfer nicht mit Drehwinkelbegrenzungen ausgebildet, durch welche bei hoher übertragener Last eine Inanlagebringung der einzelnen Windungen der Energiespeicher und damit gefährlich hohe Torsionsspannungen in den Windungen vermeidbar wäre. Diesem Problem kann üblicherweise nur durch Auslegung der Energiespeicher mit weniger hoher Torsionsspannung oder mit steiferen Energiespeichern entgegen gewirkt werden, wodurch sich allerdings die Entkopplungsgüte des Torsionsschwingungsdämpfers verschlechtert.

Die zuvor erwähnte konstruktionsbedingte Zwangsmitnahme des Turbinenrades als Masseelement in Einrückposition hat sich für eine Schwingungsdämpfung als vorteilhaft erwiesen. Die sich hierdurch ergebenden Vorteile für die Dämpfungseigenschaften des Torsionsschwingungsdämpfers sind allerdings nicht konseqent genutzt.

Ein weiterer Torsionsschwingungsdämpfer ist aus der DE 39 34 798 A1, Fig. 3 bekannt. Auch dort ist die hydrodynamische Kupplungsanordnung, als Drehmomentwandler realisiert. Der Drehmomentwandler ist mit einer Überbrückungskupplung ausgebildet, deren Kolben an seiner dem Kupplungsgehäuse zugewandten Seite mit einer Reibfläche versehen ist, über welche er mit einer Gegenreibfläche in Reibverbindung bringbar ist. Die Überbrückungskupplung stellt eine Wirkverbindung zwischen dem Kupplungsgehäuse und dem Torsionsschwingungsdämpfer her, indem eine radial äußere Nabenscheibe des letztgenannten drehfest, aber axial verschiebbar, am Kolben angreift. Die radial äußere Nabenscheibe ist als antriebsseitiges Übertragungselement des Torsionsschwingungsdämpfers wirksam und bildet gemeinsam mit ersten Energiespeichern und mit als Zwischen-Übertragungselement des Torsionsschwingungsdämpfers dienenden Deckblechen eine antriebsseitige Koppelvorrichtung. Die Deckbleche, die axial zueinander beabstandet sind, bilden ihrerseits zusammen mit zweiten Energiespeichern und mit einer radial inneren Nabenscheibe, die Teil eines abtriebsseitigen Übertragungselementes ist, eine abtriebsseitige Koppelvorrichtung. Die radial innere Nabenscheibe ist hierbei ebenso wie die radial äußere Nabenscheibe jeweils axial zwischen den Deckblechen angeordnet. Das antriebsseitige Übertragungselement weist ebenso wie das Zwischen-Übertragungselement und das abtriebsseitige Übertragungselement jeweils Ansteuerelemente für die Energiespeicher auf.

Die Nabenscheibe des abtriebsseitigen Übertragungselementes ist in ihrem radial inneren Bereich über eine Verzahnung mit einem Haltebügel drehfest, aber axial verschiebbar, verbunden, der ebenfalls Teil des abtriebsseitigen Übertragungselementes ist. Dieser ist an einer Turbinenradnabe befestigt, welche außerdem einen Turbinenradfuß des Turbinenrades fest aufnimmt. Die Turbinenradnabe kann über eine Verzahnung mit einem abtriebsseitigen Bauteil der hydrodynamischen Kupplungsanordnung, wie mit einer Getriebeeingangswelle, in drehfester Verbindung stehen.

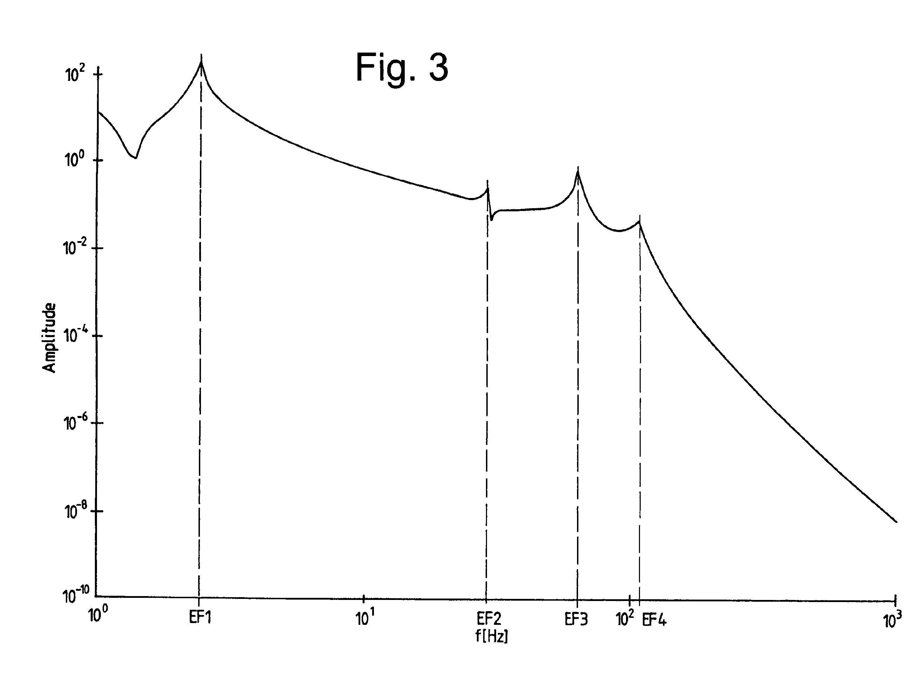

Der Antriebsstrang eines Kraftfahrzeugs kann, bei Betrachtung als freies Schwingungssystem mit einer hydrodynamischen Kupplungsanordnung, grob auf sechs Massen reduziert werden, wobei der Antrieb mit einem Pumpenrad als erste Masse, das Turbinenrad als zweite Masse, die Getriebeeingangswelle als dritte Masse, die Kardanwelle und das Differential als vierte Masse, die Räder als fünfte Masse und das Gesamtfahrzeug als sechste Masse angenommen werden. Bei einem freien Schwingungssystem mit n Massen, hier also sechs Massen, treten bekanntermaßen n-1 Eigenfrequenzen, mithin also fünf Eigenfrequenzen, auf, von denen die erste die Rotation des gesamten Schwingungssystems betrifft und im Hinblick auf Schwingungsdämpfung nicht relevant ist. Die Drehzahlen, bei welchen die Eigenfrequenzen angeregt werden, sind von der Zylinderzahl des als Brennkraftmaschine ausgebildeten Antriebs abhängig. In Fig. 3 ist schematisch ein Diagramm zur logarithmischen Darstellung des Amplitudenfrequenzganges am Turbinenrad einer hydrodynamischen Kupplungsanordnung abgebildet.

Zugunsten eines möglichst geringen Kraftstoffverbrauchs besteht die Tendenz, eine Überbrückungskupplung schon bei sehr niedriger Drehzahl zu schließen, um schlupfbedingte Verluste im hydrodynamischen Kreis so gering wie möglich zu halten. Für die Überbrückungskupplung bedeutet dies, dass sie bei einer Frequenz geschlossen wird, die zwar oberhalb der ersten und zweiten Eigenfrequenz EF 1 und EF 2, aber noch unterhalb der dritten und vierten Eigenfrequenz EF 3 und EF 4 liegt. Während die ersten beiden Eigenfrequenzen EF 1 und EF 2 im hydrodynamischen Kreis der hydrodynamischen Kupplungsanordnung dämpfbar sind, kann der Antriebsstrang beim Durchfahren der dritten und vierten Eigenfrequenz EF 3 und EF 4 zu unerwünschten Geräuschen angeregt werden, wobei insbesondere die dritte Eigenfrequenz EF 3 noch sehr große Amplituden haben kann.

Zurückkommend auf die DE 39 34 798 A1, weist der Torsionsschwingungsdämpfer gemäß Fig. 3 zwei in Reihe geschaltete Koppelvorrichtungen auf, von denen sich die antriebsseitige an einem Bauteil der Überbrückungskupplung, hier durch den Kolben gebildet, und die abtriebsseitige an einem abtriebsseitigen Bauteil der hydrodynamischen Kupplungsanordnung, wie einer Getriebeeingangswelle, abstützt. Trotz zweier Koppelvorrichtungen ist der Torsionsschwingungsdämpfer somit einerseits wirkungsmäßig mit einem Torsionsschwingungsdämpfer vergleichbar, der lediglich über eine einzelne Koppelvorrichtung zwischen seinem Antriebs- und seinem Abtriebsteil verfügt, und andererseits wirkt dieser Torsionsschwingungsdämpfer wegen der drehfesten Verbindung seines abtriebsseitigen Übertragungselementes mit dem Turbinenrad als "Standarddämpfer", wie er in Fachkreisen häufig bezeichnet ist.

Ein Standarddämpfer bietet zwar die Möglichkeit einer Dämpfung der Amplituden der als störend empfundenen dritten und vierten Eigenfrequenz EF 3 und EF 4 gleichermaßen, er ist allerdings nicht dazu befähigt, insbesondere die dritte Eigenfrequenz EF 3 soweit zu reduzieren, dass von ihr keine störende Wirkung mehr ausgeht.

In der DE 195 14 411 A1 ist in Fig. 1 eine Überbrückungskupplung dargestellt, bei welcher ein Torsionsschwingungsdämpfer durch sein antriebsseitiges Übertragungselement mit einer Turbinenradnabe einer hydrodynamischen Kupplungsanordnung und durch sein abtriebsseitiges Übertragungselement mit einem abtriebsseitigen Bauteil dieser Kupplungsanordnung, bekanntermaßen als Getriebeeingangswelle ausgebildet, wirkverbunden ist. Derartige Torsionsschwingungsdämpfer, bei denen eine Relativdrehbarkeit zwischen dem abtriebsseitigen Übertragungselement und dem Turbinenrad besteht, werden in Fachkreisen als "Turbinendämpfer" bezeichnet und haben folgende Eigenschaft:

Durch Direktverbindung des abtriebsseitigen Übertragungselementes des Torsionsschwingungsdämpfers mit der Getriebeeingangswelle wirkt die zudem mit Energiespeichern und dem antriebsseitigen Übertragungselement versehene Koppelvorrichtung als in Reihe geschaltet mit der torsionselastischen Getriebeeingangswelle. Da die Steifigkeit der Koppelvorrichtung allerdings sehr viel geringer ist als diejenige der Getriebeeingangswelle, ergibt sich eine Gesamtsteifigkeit, bei welcher die Getriebeeingangswelle als sehr weich anzusehen ist. Dies hat eine sehr gute Entkopplung zur Folge.

Hinsichtlich der Eigenfrequenzen im Antriebsstrang wirkt sich die größere Weichheit der Getriebeeingangswelle derart aus, dass die dritte und vierte Eigenfrequenz FE 3 und FE 4 zwar im Vergleich zu einem Standarddämpfer größere Amplituden aufweisen, die dritte Eigenfrequenz EF 3 aber bei beträchtlich niedrigeren Drehzahlen auftritt, und zwar bei Drehzahlen in der Größenordnung der zweiten Eigenfrequenz EF 2. Dadurch wirkt sich die dritte Eigenfrequenz EF 3 praktisch nicht mehr aus. Auf die vierte Eigenfrequenz EF 4 kann allerdings kein Einfluss genommen werden, so dass beim Durchfahren des dieser zugeordneten Drehzahlbereiches Geräusche auftreten können.

Der Erfindung liegt die Aufgabe zugrunde, einen Torsionsschwingungsdämpfer an einer Überbrückungskupplung einer hydrodynamischen Kupplungsanordnung so auszubilden, dass unerwünschte Geräusche nicht mehr wahrnehmbar sind.

Diese Aufgabe wird durch den Kennzeichenteil des Anspruches 1 gelöst.

Durch Aufnahme eines Masseelementes an einer Angriffsstelle wirkungsmäßig zwischen zwei Koppelvorrichtungen eines Torsionsschwingungsdämpfers wird dessen Wirkungscharakteristik ungeachtet der Einbausituation in eine hydrodynamische Kupplungsanordnung, wie beispielsweise einen hydrodynamischen Drehmomentwandler oder aber eine Hydrokupplung, grundlegend beeinflusst, wobei als Einbausituation für den Torsionsschwingungsdämpfer im Wesentlichen zwischen einem "Standarddämpfer" und einem "Turbinendämpfer" unterschieden wird.

Es sei noch einmal darauf hingewiesen, dass ein "Turbinendämpfer" an einer Relativdrehbarkeit seines abtriebsseitigen Übertragungselementes gegenüber einem zur Bildung des hydrodynamischen Kreises beitragenden Turbinenrad erkennbar ist. Bevorzugt ist hierbei eine konstruktive Ausführung, bei welcher das abtriebsseitige Übertragungselement des Torsionsschwingungsdämpfers an einer Turbinenradnabe befestigt ist, während das Turbinenrad über einen an seiner Turbinenradschale angeformten Turbinenradfuß drehbar gegenüber der Turbinenradnabe ist.

Im Gegensatz dazu ist bei einem "Standarddämpfer" das abtriebsseitige Übertragungselement des Torsionsschwingungsdämpfers gegenüber dem Turbinenradfuß drehfest, wobei in einer bevorzugten Ausgestaltung beide Bauteile an der Turbinenradnabe befestigt sind.

Aufgrund der erfindungsgemäßen Aufnahme eines Masseelementes wirkungsmäßig zwischen den beiden Koppelvorrichtungen des Torsionsschwingungsdämpfers wirkt dessen antriebsseitige Koppelvorrichtung als Standarddämpfer, da sie über das antriebsseitige Übertragungselement mit einem Bauteil der Überbrückungskupplung in Wirkverbindung steht, und das für diese Koppelvorrichtung als abtriebsseitiges Bauteil wirksame Zwischen-Übertragungselement mit dem Masseelement verbunden ist, das durch das Turbinenrad, ggf. ergänzt durch eine am Turbinenrad vorgesehene Zusatzmasse, gebildet wird. Ein derartiger Standarddämpfer bewirkt, wie zuvor bereits erläutert worden ist, bei dem in Fig. 3 schematisch in logarithmischer Darstellung abgebildeten Amplitudenfrequenzgang am Turbinenrad einer hydrodynamischen Kupplungsanordnung, sowohl die Amplitude der dritten Eigenfrequenz EF 3 als auch die Amplitude der vierten Eigenfrequenz EF 4 zu senken.

Ist nun die abtriebsseitige Koppelvorrichtung dieses Torsionsschwingungsdämpfers mit ihrem abtriebsseitigen Übertragungselement zu einer Relativdrehung gegenüber dem Turbinenrad befähigt, indem beispielsweise dessen Turbinenradfuß an einer das abtriebsseitige Übertragungselement des Torsionsschwingungsdämpfers fest aufnehmenden Turbinenradnabe drehbar angeordnet ist, so ist die abtriebsseitige Koppelvorrichtung als Turbinendämpfer wirksam, der, nachdem durch die als Standarddämpfer geschaltete antriebsseitige Koppelvorrichtung die Eigenfrequenzen EF 3 und EF 4 bereits reduziert sind, die hiervon störendere Eigenfrequenz EF 3 zu einer niedrigeren Drehzahl verlagert, bei welcher diese nicht mehr störend in Erscheinung tritt. Durch die Maßnahme, an einer Angriffsstelle wirkungsmäßig zwischen den beiden Koppelvorrichtungen des Torsionsschwingungsdämpfers das Turbinenrad sowie gegebenenfalls zumindest eine Zusatzmasse an einem Zwischen-Übertragungselement des Torsionsschwingungsdämpfers anzubinden, und außerdem das Turbinenrad abtriebsseitig gegenüber einem abtriebsseitigen Übertragungselement des Torsionsschwingungsdämpfers drehbar anzuordnen, entsteht demnach ein Torsionsschwingungsdämpfer, bei welchem sich, vereint in einer Baueinheit, die funktionellen Vorzüge sowohl eines Standarddämpfers als auch eines Turbinendämpfers aufeinander folgend ergänzen. So gelangt schließlich von den auszufilternden Eigenfrequenzen EF 3 und EF 4 lediglich die weniger störende Eigenfrequenz EF 4 auf ein abtriebsseitiges Bauteil der hydrodynamischen Kupplungsanordnung, wie beispielsweise eine Getriebeeingangswelle, und dies zudem mit reduzierter Amplitude.

Ist das am Zwischen-Übertragungselement an einer Angriffsstelle zwischen den beiden Koppelvorrichtungen angreifende Masseelement gemäß einer anderen bevorzugten Ausgestaltung dagegen relativ zum Turbinenrad bewegbar, und statt dessen das Turbinenrad gemeinsam mit dem abtriebsseitigen Übertragungselement des Torsionsschwingungsdämpfers drehfest mit einem abtriebsseitigen Bauteil der hydrodynamischen Kupplungsanordnung verbunden, dann wirkt zwar jede Koppelvorrichtung für sich jeweils als Standarddämpfer, jedoch bewirkt jede der Koppelvorrichtungen aufgrund des Zusammenwirkens mit jeweils einer eigenständigen Masse jeweils eine eigenständige Dämpfung der Eigenfrequenzen EF 3 und EF 4, sodass diese beiden Eigenfrequenzen durch die antriebsseitige Koppelvorrichtung um einen ersten Betrag reduziert werden, und durch die abtriebsseitige Koppelvorrichtung um einen zweiten Betrag. Messungen auf Prüfständen haben ergeben, dass durch Anbindung des Masseelementes an das Zwischen-Übertragungselement die Eigenfrequenzen EF 3 und EF 4 durch die abtriebsseitige Koppelvorrichtung im Wesentlichen um den gleichen Betrag reduzierbar sind wie durch die antriebsseitige Koppelvorrichtung. Damit sind zwar bei dieser Ausführung des Torsionsschwingungsdämpfers noch beide Eigenfrequenzen EF 3 und EF 4 in ihren eigentlichen Drehzahlbereichen vorhanden, werden allerdings aufgrund der extrem starken betragsmäßigen Reduzierung nicht als störend empfunden. Eine derart starke Reduzierung dieser Eigenfrequenzen wäre ohne das zwischen den beiden Koppelvorrichtungen angreifende Masseelement unmöglich, da am Torsionsschwingungsdämpfer das ansonsten lediglich vorhandene Zwischen-Übertragungselement als praktisch massefrei angesehen werden muss.

Um die Wirkung des Masseelementes bei beiden zuvor geschilderten Ausführungen des Torsionsschwingungsdämpfers so stark als möglich zur Geltung kommen zu lassen, ist die jeweilige Zusatzmasse jeweils soweit als möglich radial außen angeordnet. Hierdurch ergibt sich bei Angriff des Turbinenrades am Zwischen-Übertragungselement, dass das Turbinenrad die Zusatzmasse bevorzugt in seinem radial äußeren Bereich aufnimmt, während bei relativ drehbarer Anordnung des Masseelementes gegenüber dem Turbinenrad dieses Masseelement im Wesentlichen durch eine Zusatzmasse gebildet ist, die über eine im Wesentlichen nach radial außen verlaufende, als Träger ausgebildete Anbindung am Zwischen-Übertragungselement befestigt ist. Selbstverständlich kann diese Anbindung axial elastisch ausgebildet sein, was sich bei Einleitung von Taumelbewegungen auf den Torsionsschwingungsdämpfer vorteilhaft auswirken kann.

Durch Ausbildung des nachfolgend kurz als "Turbinenradfuß" bezeichneten radial inneren Endes einer Turbinenradschale des Turbinenrades der Kupplungsanordnung als zweites Deckblech, das mit dem als Zwischen-Übertragungselement wirksamen ersten Deckblech drehfest ist, kann ebenso der Bauteileaufwand wie der Bauraumbedarf reduziert werden. Den gleichen Vorteil erbringt die Maßnahme, sowohl das antriebsseitige Übertragungselement des Torsionsschwingungsdämpfers als auch zumindest ein Bauteil einer Verdrehwinkelbegrenzung an einem gemeinsamen Ansteuerblech zu befestigen, das bevorzugt an einem Kolben der Überbrückungskupplung der Kupplungsanordnung befestigt und somit einer Bewegung des Kolbens in Umfangsrichtung nachführbar ist. Noch geringer kann der Bauteileaufwand sein, wenn der Kolben selbst als antriebsseitiges Übertragungselement des Torsionsschwingungsdämpfers ausgebildet ist.

Weiteres Reduzierungspotential im Bauteileaufwand und Bauraumbedarf entsteht, wenn das Zwischen-Übertragungselement direkt an der Turbinenradschale zu befestigen ist, beispielsweise mittels einer Schweißung. Ebenfalls vorteilhaft ist, ohnehin vorhandene, zur Anbindung des Turbinenrades an das Zwischen-Übertragungselement dienende Zapfen in einer Zusatzfunktion als Verdrehwinkelbegrenzung zu nutzen. Weitere diesbezügliche Vorteile sind erzielbar, wenn das Masseelement in Form des Turbinenrades durch eine im radial äußeren Bereich der Turbinenradschale vorgenommene Umkantung um eine Zusatzmasse ergänzt ist.

In weiteren Ansprüchen sind vorteilhafte Weiterbildungen des Torsionsschwingungsdämpfers angegeben, um diesen kompakt gestalten zu können.

Die Funktionalität des Torsionsschwingungsdämpfers ist nicht auf radial übereinander angeordnete Koppelvorrichtungen angewiesen, sondern kann ebenso auch mit Koppelvorrichtungen realisiert sein, die mit im Wesentlichen gleichen Radialabständen gegenüber einer Drehachse der hydrodynamischen Kupplungsanordnung, aber mit Umfangsversatz zueinander vorgesehen sind. Bei Anordnung beider Koppelvorrichtungen auf gleicher radialer Höhe und im radial äußeren Bereich der Kupplungsanordnung kann ein beträchtliches Volumen für die Energiespeicher beider Kopplungsanordnungen bereitgestellt werden, sodass trotz der Komprimierung beider Koppelvorrichtungen auf nur einen Teilkreisdurchmesser eine hinreichend weiche Gesamtfederrate erzielbar ist, die ein Absenken der Eigenfrequenz des Systems auf einen unkritischen Frequenzbereich ermöglicht. Außerdem werden durch Anordnung beider Koppelvorrichtungen auf nur einem Teilkreisdurchmesser Bauteile eingespart, die bei zwei Teilkreisdurchmessern vermehrt vorhanden sein müssten, wie beispielsweise Energiespeicher und Deckbleche zur Aufnahme und Ansteuerung der zusätzlichen Energiespeicher. Dadurch reduziert sich das Gewicht sowie das Massenträgheitsmoment eines Torsionsschwingungsdämpfers mit beiden Koppelvorrichtungen auf einem Teilkreisdurchmesser gegenüber Torsionsschwingungsdämpfern, bei denen die Koppelvorrichtungen mit Radialversatz angeordnet sind, und der Bauraumbedarf sinkt, zumal wenn beide Koppelvorrichtungen auf einem radial äußeren Teilkreisdurchmesser angeordnet sind, in welchem das Turbinenrad weniger axialen Bauraum benötigt als radial weiter innen. Damit ist eine derartige Einbausituation der Kopplungsvorrichtungen bei Kraftfahrzeugen zu bevorzugen, bei denen aufgrund geringer Schwingungen im Antriebsstrang eine Gewichts- und Bauraumreduzierung wichtiger als der Aufbau eines sehr hohen Massenträgheitsmomentes ist.

Ein weiterer Vorteil bei dieser Ausführung des Torsionsschwingungsdämpfers entsteht bei der Anbindung des Turbinenrades als Masseelement, da das Turbinenrad über ein mit Ansteuervorsprüngen versehenes Deckblech unmittelbar zwischen die Energiespeicher der beiden Koppelvorrichtungen greift und somit unter Verzicht auf zwischengeschaltete Bauteile, inmitten der beiden Koppelvorrichtungen "schwimmend" gelagert sein kann.

Die den erfindungsgemäßen Torsionsschwingungsdämpfer aufweisende hydrodynamische Kupplungsanordnung kann über lediglich eine Reibfläche zwischen dem Gehäusedeckel des Kupplungsgehäuses und dem Kolben der Überbrückungskupplung verfügen, jedoch ist die Anzahl an Reibflächen durch Anordnung zumindest einer Lamelle axial zwischen dem Gehäusedeckel und dem Kolben steigerbar, um das durch die Überbrückungskupplung übertragbare Drehmoment zu erhöhen. Werden zwei oder mehrere Lamellen in die Überbrückungskupplung eingebracht, so ist es vorteilhaft, in Achsrichtung zwischen jeweils zwei Lamellen eine Zwischenlamelle einzubringen, die gegenüber dem Gehäusedeckel drehfest ist. Diese Drehfestigkeit ist beispielsweise durch Befestigung einer Drehsicherung am Gehäusedeckel realisierbar, wobei diese Drehsicherung mit Vorzug über eine Verzahnung drehfest mit der Zwischenlamelle verbunden ist. Bei Ausführung der Überbrückungskupplung beispielsweise mit zwei Lamellen und einer Zwischenlamelle entstehen insgesamt vier Reibflächen, sodass sich diese Überbrückungskupplung durch eine sehr hohe Drehmoment-übertragungsfähigkeit auszeichnet. Es ist hierbei unerheblich, ob die Lamellen jeweils beidseits mit Reibbelägen ausgebildet sind, während die Zwischenlamelle reibbelagsfrei ist, oder ob die Lamellen an ihren jeweils der Zwischenlamelle zugewandten Seiten ohne Reibbeläge ausgebildet sind, die Zwischenlamelle dagegen beidseits Reibbeläge trägt.

Mit Vorzug ist die jeweilige Lamelle über eine Verzahnung drehfest an einem Haltebügel angebunden, der wiederum in drehfester Verbindung mit einem das Drehmoment auf den Torsionsschwingungsdämpfer leitenden antriebsseitigen Übertragungselement steht.

Die Erfindung ist anhand von Ausführungsbeispielen näher erläutert. Es zeigt:
- Fig. 1:: die obere Hälfte eines Längsschnittes durch eine hydrodynamische Kupplungsanordnung mit einer Überbrückungskupplung und einem Torsionsschwingungsdämpfer, bei welchem ein Turbinenrad als Masseelement wirkungsmäßig zwischen zwei mit Radialversatz angeordneten Koppelvorrichtungen angreift;
- Fig. 2:: wie Fig. 1, aber mit einem Torsionsschwingungsdämpfer, bei dem eine Zusatzmasse als Masseelement wirksam ist;
- Fig. 3:: ein schematisches Diagramm zur logarithmischen Darstellung des Amplitudenfrequenzganges am Turbinenrad der hydrodynamischen Kupplungsanordnung.
- Fig. 4:: ein Torsionsschwingungsdämpfer nach dem Funktionsprinzip wie bei Fig. 1, aber mit reduziertem Bauteileaufwand;
- Fig. 5: wie Fig. 4, aber mit nochmals reduziertem Bauteileaufwand;
- Fig. 6: wie Fig. 4, aber mit Anbindung des Turbinenrades radial weiter innen an den Torsionsschwingungsdämpfer;
- Fig. 7: wie Fig. 1, aber mit Anordnung beider Koppelvorrichtungen ohne Radialversatz, aber mit Umfangsversatz zueinander;
- Fig. 8: eine Draufsicht auf die Koppelvorrichtungen mit Blickrichtung VIII-VIII in Fig. 7;
- Fig. 9: eine schematische Darstellung der schaltungsgemäßen Verknüpfung der Koppelvorrichtungen miteinander;

- Fig. 10:: wie Fig. 8, aber mit einer anderen Kombination von Koppelvorrichtungen;
- Fig. 11: wie Fig. 9, aber mit einer anderen schaltungsgemäßen Verknüpfung der Koppelvorrichtungen miteinander;
- Fig. 12: wie Fig. 6, aber mit einer Mehrzahl an Reibflächen an der Überbrückungskupplung.

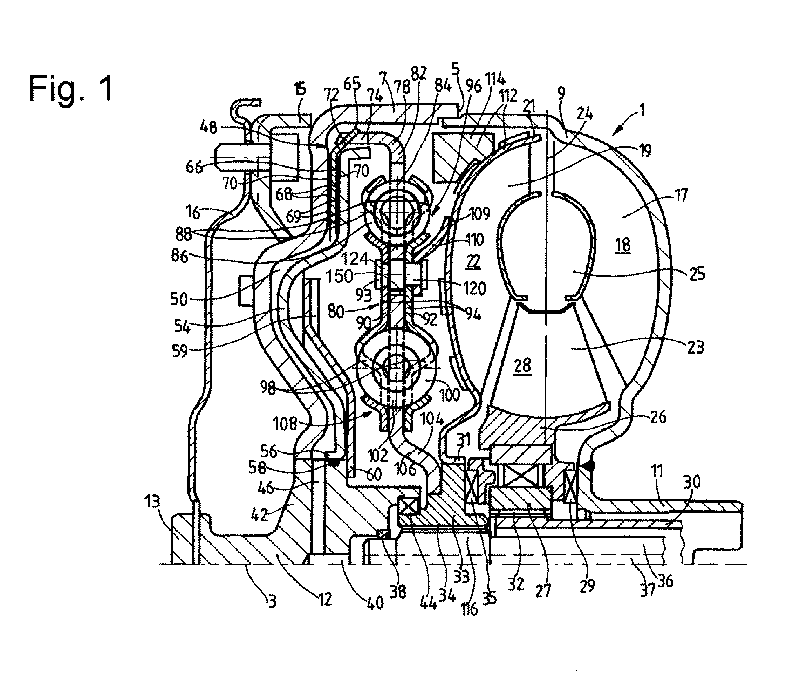

In Fig. 1 ist eine hydrodynamische Kupplungsanordnung 1 in Form eines hydrodynamischen Drehmomentwandlers dargestellt, der um eine Drehachse 3 Rotationsbewegungen auszuführen vermag. Die hydrodynamische Kupplungsanordnung 1 verfügt über ein Kupplungsgehäuse 5, das an seiner einem nicht gezeigten Antrieb, wie beispielsweise einer Brennkraftmaschine, zugewandten Seite einen Gehäusedeckel 7 aufweist, der fest mit einer Pumpenradschale 9 verbunden ist. Diese geht im radial inneren Bereich in eine Pumpenradnabe 11 über.

Zurückkommend auf den Gehäusedeckel 7, weist dieser im radial inneren Bereich eine einen Lagerzapfen 13 tragende Zapfennabe 12 auf, wobei der Lagerzapfen 13 in bekannter und daher nicht näher dargestellter Weise an einem Element des Antriebs, wie beispielsweise einer Kurbelwelle, zur antriebsseitigen Zentrierung des Kupplungsgehäuses 5 aufgenommen ist. Weiterhin verfügt der Gehäusedeckel 7 über eine Befestigungsaufnahme 15, die zur Befestigung des Kupplungsgehäuses 5 am Antrieb dient, und zwar vorzugsweise über die Flexplatte 16. Bezüglich einer zeichnerischen Darstellung der Aufnahme des Lagerzapfens einer hydrodynamischen Kupplungsanordnung in einer Kurbelwelle eines Antriebs sowie einer Anbindung der hydrodynamischen Kupplungsanordnung über eine Flexplatte an die Kurbelwelle wird beispielhaft auf die DE 32 22 119 C1, Fig. 1 verwiesen.

Die bereits erwähnte Pumpenradschale 9 bildet zusammen mit Pumpenradschaufeln 18 ein Pumpenrad 17, das mit einem eine Turbinenradschale 21 und Turbinenradschaufeln 22 aufweisenden Turbinenrad 19 sowie mit einem mit Leitradschaufeln 28 versehenen Leitrad 23 zusammenwirkt. Pumpenrad 17, Turbinenrad 19 und Leitrad 23 bilden in bekannter Weise einen hydrodynamischen Kreis 24, der einen Innentorus 25 umschließt.

Die Leitradschaufeln 28 des Leitrades 23 sind auf einer Leitradnabe 26 vorgesehen, die auf einem Freilauf 27 angeordnet ist. Der Letztgenannte stützt sich über eine Axiallagerung 29 an der Pumpenradnabe 11 axial ab und steht in drehfester, aber axial relativ verschiebbarer Verzahnung 32 mit einer Stützwelle 30, die radial innerhalb der Pumpenradnabe 11 angeordnet ist. Die als Hohlwelle ausgebildete Stützwelle 30 ihrerseits umschließt eine als abtriebsseitiges Bauteil 116 der hydrodynamischen Kupplungsvorrichtung 1 dienende Getriebeeingangswelle 36, die mit einer Mittenbohrung 37 zum Durchgang von Hydraulikflüssigkeit versehen ist. Die Getriebeeingangswelle 36 nimmt über eine Verzahnung 34 eine Turbinenradnabe 33 drehfest, aber axial verschiebbar auf, wobei diese Turbinenradnabe 33 in einem radial äußeren Bereich zur relativ drehbaren Aufnahme eines Turbinenradfußes 31 dient. Die Turbinenradnabe 33 stützt sich einerseits über eine Axiallagerung 35 am bereits genannten Freilauf 27 ab, und kommt andererseits über eine Axiallagerung 44 an der Zapfennabe 12 zur Anlage, die nach radial innen über eine Abdichtung 38 gegenüber der Getriebeeingangswelle 36 abgedichtet ist.

Die bereits erwähnte Mittenbohrung 37 in der Getriebeeingangswelle 36 dient zur Versorgung des hydrodynamischen Kreises 24 sowie zur Druckbeaufschlagung einer noch zu erläuternden Überbrückungskupplung 48, wozu eine Verbindung mit einer Steuervorrichtung und einem Hydraulikflüssigkeitsvorrat erforderlich ist. Weder die Steuervorrichtung noch der Hydraulikflüssigkeitsvorrat sind zeichnerisch dargestellt, können aber der Fig. 1 der DE 44 23 640 A1 entnommen werden und sind daher als inhaltlich in die jetzt vorliegende Patentanmeldung aufgenommen zu betrachten.

Über die Mittenbohrung 37 der Getriebeeingangswelle 36 eingeströmte Hydraulikflüssigkeit gelangt in einen Übergangsraum 40 und von diesem über Kanäle 46 der als Strömungsdurchlass 42 dienenden Zapfennabe 12 nach radial außen in eine Kammer 50, die axial zwischen dem Gehäusedeckel 7 und einem Kolben 54 der bereits erwähnten Überbrückungskupplung 48 angeordnet ist. Dieser zentrisch zum Gehäusedeckel 7 angeordnete Kolben 54 ist mit seiner von der Kammer 50 abgewandten Seite dem hydrodynamischen Kreis 24 zugewandt und in Abhängigkeit von den Druckverhältnissen im hydrodynamischen Kreis 24 sowie in der Kammer 50 zum Ein- oder Ausrücken der Überbrückungskupplung 48 zwischen zwei unterschiedlichen Grenzstellungen bewegbar. Der Kolben 54 ist mittels eines auf der Zapfennabe 12 gelagerten Kolbenfußes 56 axial verschiebbar, wobei eine in der Zapfennabe 12 eingelassene Kolbendichtung 58 ihre Abdichtfunktion gegenüber dem Kolbenfuß 56 wahrnimmt. Der Kolben 54 ist über Tangentialblattfedern 59 an einer Aufnahmevorrichtung 60 angebunden, die an der Zapfennabe 12 befestigt ist. Die Tangentialblattfedern 59 halten den Kolben 54 unter Vorspannung in Bezug zu einer nachfolgend beschriebenen Lamelle 65.

Die Lamelle 65 ist axial zwischen dem Wandlerdeckel 7 und dem Kolben 54, im radial äußeren Bereich des Letztgenannten, angeordnet und verfügt über einen Reibbelagträger 66 sowie beidseits an demselben aufgenommene Reibbeläge 68, wobei durch jeden Reibbelag 68 je ein Reibbereich 69 bereitgestellt wird, der mit je einem Gegenreibbereich 70 am Gehäusedeckel 7 oder am Kolben 54 zusammenwirkt. Der Reibbelagträger 66 ist an seinem Außenumfang - in Umfangsrichtung gesehen - mit Verzahnungen 72 versehen, die mit Gegenverzahnungen 74 eines antriebsseitigen Übertragungselementes 78 eines Torsionsschwingungsdämpfers 80 verbunden sind. Der Reibbelagträger 66 und damit die Lamelle 65 steht über die Verzahnungen 72/Gegenverzahnungen 74 in drehfester, aber axial relativ bewegbarer Verbindung zum antriebsseitigen Übertragungselement 78 des Torsionsschwingungsdämpfers 80.

Das antriebsseitige Übertragungselement 78 verfügt über einen sich im Wesentlichen radial erstreckenden Bereich, der als radial äußere Nabenscheibe 82 wirksam ist und über nach radial innen greifende Ansteuerelemente 84 verfügt, die mit ersten Energiespeichern 86 in Anlage versetzbar sind. Die Energiespeicher 86 verlaufen im Wesentlichen in Umfangsrichtung und stützen sich anderenends an nach radial außen greifenden Ansteuerelementen 88 von Deckblechen 90, 92 ab, welche beispielsweise über Zapfen 93 drehfest zueinander angeordnet sind und gemeinsam als Zwischen-Übertragungselement 94 des Torsionsschwingungsdämpfers 80 wirksam sind. Der Zapfen 93 dient in einer Zusatzfunktion als Bauteil einer Verdrehwinkelbegrenzung 124 zwischen den Deckblechen 90, 92 und der Nabenscheibe 82, wofür die Letztgenannte mit Aussparungen 150 ausgebildet ist, die sich in Umfangsrichtung langlochförmig erstrecken und eine Relativbewegung des Zapfens 93 in dieser Richtung zulassen.

Im radial inneren Bereich verfügen die Deckbleche 90, 92 über im Wesentlichen nach radial innen ragende Ansteuerelemente 98 für zweite Energiespeicher 100, die sich ebenfalls im Wesentlichen in Umfangsrichtung erstrecken und sich anderenends an im Wesentlichen nach radial außen greifenden Ansteuerelementen 102 einer radial inneren Nabenscheibe 104 abstützen. Die letztgenannte Nabenscheibe dient als abtriebsseitiges Übertragungselement 106, das, beispielsweise aufgrund eines Schweißvorganges, an der Turbinenradnabe 33 befestigt ist.

Ergänzend soll angemerkt werden, dass aus dem antriebsseitigen Übertragungselement 78 in Verbindung mit den ersten Energiespeichern 86 und dem Zwischen-Übertragungselement 94 eine antriebsseitige Koppelvorrichtung 96 des Torsionsschwingungsdämpfers 80 gebildet wird, während das Zwischen-Übertragungselement 94 zusammen mit den zweiten Energiespeichern 100 und dem abtriebsseitigen Übertragungselement 106 eine abtriebsseitige Koppelvorrichtung 108 bildet.

An einer Angriffsstelle 120 im radialen Erstreckungsbereich des Zwischen-Übertragungselementes 94 radial zwischen den beiden Koppelvorrichtungen 96 und 108 dient der Zapfen 93 in einer weiteren Funktion zur Befestigung einer Anbindung 110, und zwar am turbinenradseitigen Deckblech 92, wobei die Anbindung 110 anderenends am Turbinenrad 19 befestigt ist, und zwar bevorzugt mittels einer Schweißung 109 an der Turbinenradschale 21. Auf diese Weise ist das Turbinenrad 19 zumindest Teil eines Masseelementes 112, das wirkungsmäßig zwischen den beiden Koppelvorrichtungen 96 und 108 am Zwischen-Übertragungselement 94 angebunden ist. Dieses Masseelement 112 kann weiterhin eine dem Turbinenrad 19 zugeordnete Zusatzmasse 114 aufweisen, die bevorzugt an der Turbinenradschale 21 befestigt ist, beispielsweise durch Schweißung. Mit Vorzug wird diese Zusatzmasse 114 im radial äußeren Bereich des Turbinenrades 19 angeordnet, um dessen Massenträgheit soweit als möglich zu erhöhen.

Da für die antriebsseitige Koppelvorrichtung 96 das Zwischen-Übertragungselement 94 als abtriebsseitiges Bauteil wirksam ist, und dieses aufgrund der Anbindung 110 mit dem Turbinenrad 19 in Festverbindung steht, wirkt die antriebsseitige Koppelvorrichtung 96 wie ein Standarddämpfer. Im Gegensatz dazu dient das Zwischen-Übertragungselement 94 bei der abtriebsseitigen Koppelvorrichtung 108 als antriebsseitiges Bauteil, während das abtriebsseitige Übertragungselement 106 dieser Koppelvorrichtung 108 zwar mit der Turbinenradnabe 33 drehfest, gegenüber dem Turbinenrad 19 dagegen relativ drehbar ist. Insofern ist die abtriebsseitige Koppelvorrichtung 108 als Turbinendämpfer wirksam, bei dem eine relative Drehbarkeit seines abtriebsseitigen Bauteiles gegenüber dem Turbinenrad Voraussetzung ist.

Insgesamt gesehen, zeigt demnach Fig. 1 einen Torsionsschwingungsdämpfer 80, bei welchem ein Standarddämpfer und ein Turbinendämpfer in einer Baueinheit in Reihe geschaltet sind und sich demnach bezüglich ihrer jeweils spezifischen Wirkungen ergänzen können.

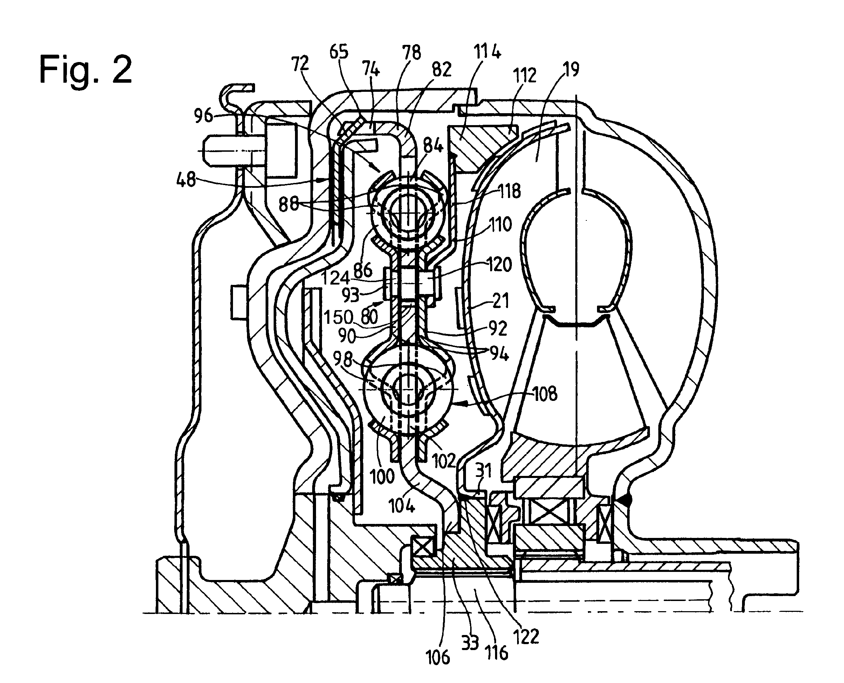

Der Torsionsschwingungsdämpfer 80 gemäß Fig. 2 entspricht bezüglich der konstruktiven Gestaltung der antriebsseitigen Koppelvorrichtung 96 der Ausführung nach Fig. 1, sodass auch hier die antriebsseitige Koppelvorrichtung 96 als Standarddämpfer wirksam ist. Abweichend von Fig. 1 ist allerdings über den Zapfen 93 am turbinenradseitigen Deckblech 92 und damit an der Angriffsstelle 120 des Zwischen-Übertragungselementes 94 eine Anbindung 110 in Form eines Trägers 118 für die Zusatzmasse 114 befestigt, sodass die Letztgenannte gegenüber dem Turbinenrad 19 in Umfangsrichtung relativ verlagerbar ist. Der Träger 118 erstreckt sich, ausgehend von seiner Angriffsstelle 120 am Zapfen 93, im Wesentlichen mit einer erheblichen radialen Komponente nach radial außen, sodass die Zusatzmasse 114 bis in den radial äußeren Bereich des Turbinenrades 19 geführt werden kann. Damit ergibt sich für das aus Zusatzmasse 114 und Träger 118 bestehende Masseelement 112 eine hohe Trägheitswirkung, die am Zwischen-Übertragungselement 94 des Torsionsschwingungsdämpfers 80 wirksam ist.

Bezogen auf die abtriebsseitige Koppelvorrichtung 108 dient das Zwischen-Übertragungselement 94 in Verbindung mit dem Masseelement 112 als antriebsseitiges Bauteil, während das abtriebsseitige Übertragungselement 106 gemeinsam mit dem Turbinenradfuß 31 an der Turbinenradnabe 33 befestigt ist, und zwar vorzugsweise über eine Schweißung 122, wodurch auch die abtriebsseitige Koppelvorrichtung 108 als Standarddämpfer wirksam ist. Der Torsionsschwingungsdämpfer 80 besteht demnach bei dieser Ausführung aus zwei wirkungsmäßig hintereinander geschalteten Standarddämpfern, wobei erst der Angriff des Masseelementes 112 zwischen den beiden Koppelvorrichtungen 96 und 108 die extrem dämpfungsverstärkende Wirkung zweier separat voneinander wirksamer Koppelvorrichtungen erbringt. Ohne Anbindung des Masseelementes 112 am Zwischen-Übertragungselement 94 wäre statt dessen das Letztgenannte praktisch als masselos zu betrachten, sodass sich die erfindungsgemäß beschriebene Wirkung nicht einstellen würde.

Mit Vorzug ist der erwähnte Träger 118 für die Zusatzmasse 114 axial elastisch ausgebildet, sodass die Zusatzmasse 114 bei Einleitung von Taumelbewegungen auf den Torsionsschwingungsdämpfer 80 gewünschte axiale Ausweichbewegungen vollziehen kann.

Weitere Ausführungen sind in den folgenden Figuren dargestellt, wobei in diesen Ausführungen, ebenso wie bei der zuvor behandelten Fig. 1, jeweils das Turbinenrad 19 als Masseelement 112 herangezogen wird, aber, abweichend von Fig. 1, eine hydrodynamische Kupplungsanordnung behandelt ist, bei welcher axial zwischen dem Kolben 54 der Überbrückungskupplung 48 und dem Gehäusedeckel 7 auf eine Lamelle 65 verzichtet wird. Statt dessen ist jeweils an der dem Gehäusedeckel 7 zugewandten Seite des Kolbens 54 ein einzelner Reibbelag 68 aufgebracht, sodass nun der Kolben 54 als Reibbelagträger 66 dient.

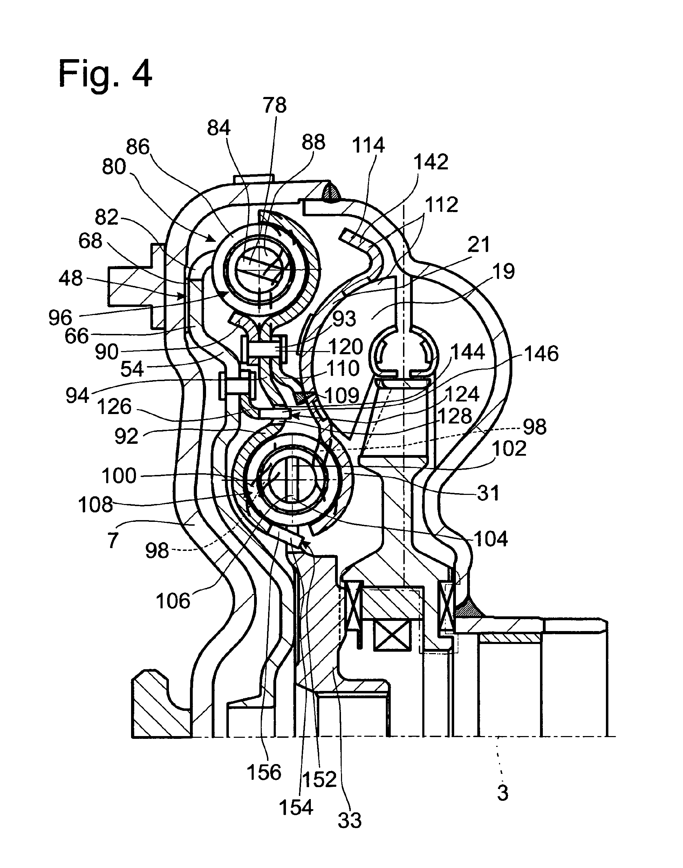

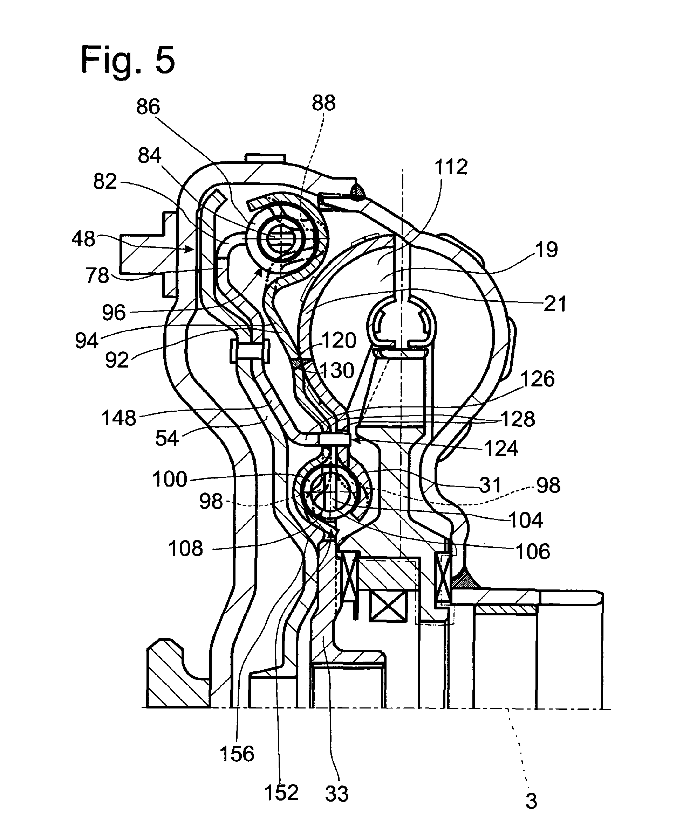

Bei dem als Reibbelagträger 66 vorgesehenen Kolben 54 ist das antriebsseitige Übertragungselement 78 des Torsionsschwingungsdämpfers 80 entweder, wie bei Fig. 4, einstückig angeformt, oder aber, wie bei den Fig. 5 - 7, an einem Ansteuerblech 148 realisiert, das am Kolben 54 drehfest befestigt ist, und, mit radialer Distanz zum antriebsseitigen Übertragungselement 78, über ein Sicherungselement 126 einer noch zu beschreibenden Ausführung der Verdrehwinkelbegrenzung 124 verfügt. In all diesen Ausführungen dient das antriebsseitige Übertragungselement 78 jeweils als radial äußere Nabenscheibe 82, welche die Ansteuerelemente 84 für die ersten Energiespeicher 86 der antriebsseitigen Koppelvorrichtung 96 bereitstellt.

Die Energiespeicher 86 stützen sich bei der Ausführung nach Fig. 4 anderenends an einem als Zwischen-Übertragungselement 94 dienenden Deckblech 92 ab, das sowohl die ersten Energiespeicher 86 als auch die radial innerhalb derselben liegenden zweiten Energiespeicher 100 der abtriebsseitigen Koppelvorrichtung 108 jeweils im Wesentlichen halbkreisförmig umschließt und gleichzeitig für die ersten Energiespeicher 86 Ansteuerelemente 88 und für die zweiten Energiespeicher 100 Ansteuerelemente 98 zur Verfügung stellt. Die zweiten Energiespeicher 100 stützen sich mit ihren von den Ansteuerelementen 98 abgewandten Seiten an Ansteuerelementen 102 der radial inneren Nabenscheibe 104 ab, die an der Turbinenradnabe 33 vorgesehen ist.

Das Deckblech 92 weist radial unmittelbar innerhalb der ersten Energiespeicher 86 Zapfen 93 auf, die nicht nur ein sehr kompaktes, mit dem Deckblech 92 drehfestes zweites Deckblech 90 festhalten, sondern darüber hinaus auch als Angriffstelle 120 für eine Anbindung 110 dienen, die mittels der Schweißung 109 an der Turbinenradschale 21 des Turbinenrades 19 befestigt ist. Dadurch kann das Turbinenrad 19 als Masseelement 112 wirksam werden, zumal die Turbinenradschale 21 im radial äußeren Bereich über eine Umkantung 142 verfügt, die im Sinne einer Zusatzmasse 114 wirksam ist.

Die Turbinenradschale 21 ist im radial inneren Bereich in Richtung zur Turbinenradnabe 33 verlängert und umschließt ein Kreissegment der zweiten Energiespeicher 100. Damit wird dieser radial innere Abschnitt der Turbinenradschale 21, nachfolgend kurz als Turbinenradfuß 31 bezeichnet, im Sinne eines Deckbleches nutzbar, das ebenso wie das bereits erwähnte, als Zwischen-Übertragungselement 94 dienende Deckblech 92 Ansteuerelemente 98 für die zweiten Energiespeicher 100 bereitstellt und aufgrund der drehfesten Verbindung der Turbinenradschale 21 mit dem Deckblech 92 gegenüber diesem drehfest ist.

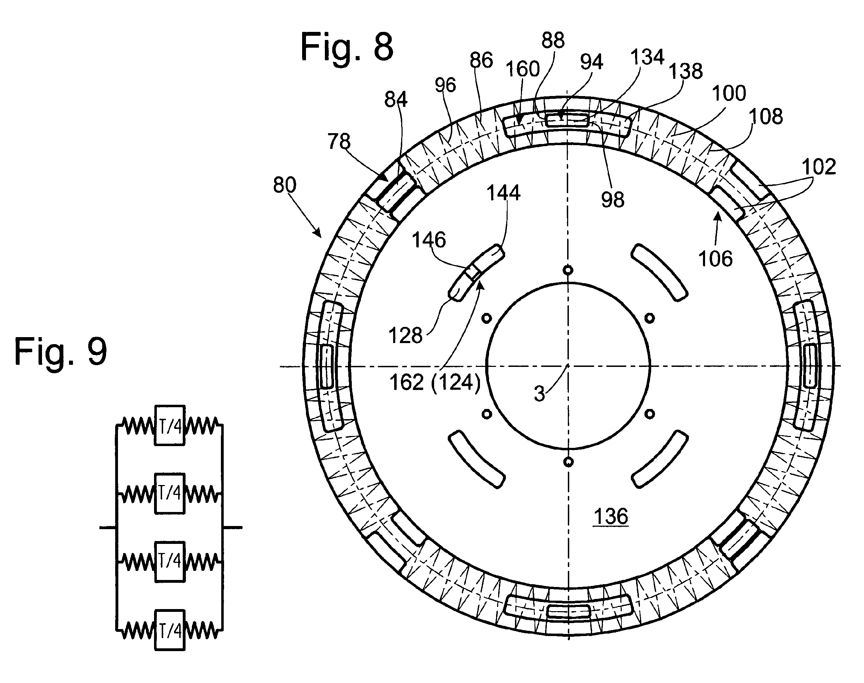

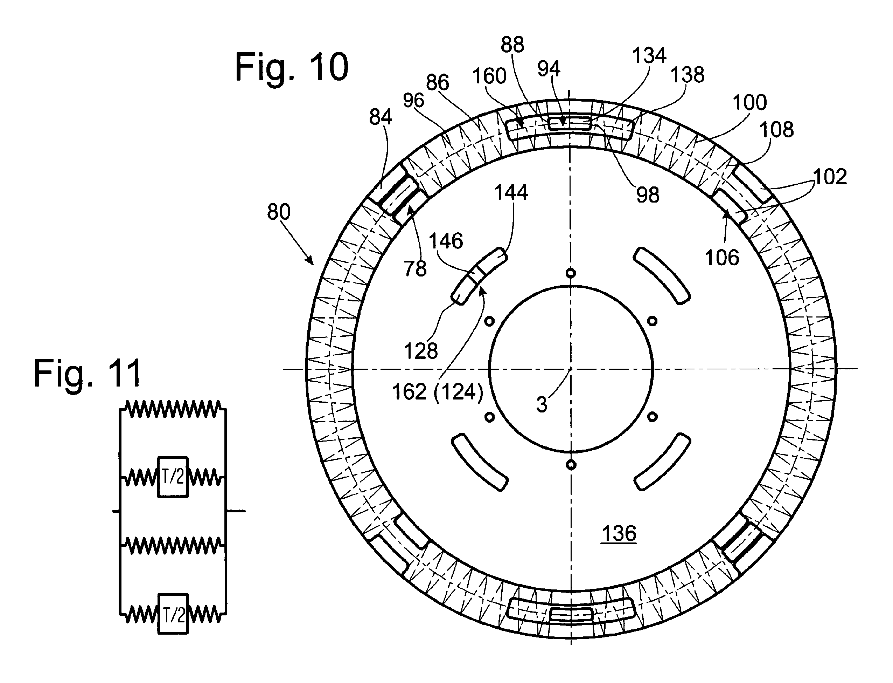

Auch bei dieser Ausführung ist eine Verdrehwinkelbegrenzung 124 vorgesehen, die über ein am Kolben 54 befestigtes Sicherungselement 126 mit im Wesentlichen L-förmigem Querschnitt verfügt, das mit einem Gegensicherungselement 128 im Deckblech 92 zusammenwirkt. Bei dem Gegensicherungselement 128 handelt es sich um in Umfangsrichtung erstreckte Schlitze 144, in welche am Sicherungselement 126 vorgesehene Axialvorsprünge 146 eingreifen, und zwar mit einem Bewegungsbereich in Umfangsrichtung, welcher eine maximale Relativdrehauslenkung zwischen dem antriebsseitigen Übertragungselement 78 des Torsionsschwingungsdämpfers 80 und dessen Zwischen-Übertragungselement 94 vorgibt. Beispielhaft ist in den Fig. 8 oder 10 die größenmäßige Relation der Axialvorsprünge 146 gegenüber den Schlitzen 144 zeichnerisch dargestellt.

Eine zweite Verdrehwinkelbegrenzung 152 ist radial innerhalb der abtriebsseitigen Koppelvorrichtung 108 vorgesehen, welche die maximale Drehwinkelauslenkung des Zwischen-Übertragungselementes 94 gegenüber dem abtriebsseitigen Übertragungselement 106 vorgibt. Bei dieser Drehdrehwinkelbegrenzung 152 umgreifen mit Umfangsversatz zueinander ausgebildete Axialvorsprünge 154 eines Sicherungselementes 156 mit dem entsprechenden Umfangsspiel die Ansteuerelemente 102 der radial inneren Nabenscheibe 104.

Durch die Ausführung nach Fig. 4 geht im Vergleich zu derjenigen nach Fig. 1, beispielsweise durch den Wegfall eines Deckbleches infolge des an der Turbinenradschale 21 vorgesehenen Turbinenradfußes 31 mit Ansteuerelementen 98 eine Bauteilreduzierung einher.

Die Ausführung nach Fig. 5 unterscheidet sich im Wesentlichen von derjenigen gemäß Fig. 4 durch das am Kolben 54 befestigte, bereits behandelte Ansteuerblech 148. Die am Ansteuerblech 148 vorgesehene Verdrehwinkelbegrenzung 124 entspricht im Wesentlichen derjenigen in Fig. 4, durchgreift aber nicht nur ein Gegensicherungselement 128 in dem als Zwischen-Übertragungselement 94 wirksamen Deckblech 92, sondern darüber hinaus auch ein Gegensicherungselement 128 in der Turbinenradschale 21. Dadurch ergibt sich gegenüber der Lösung nach Fig. 4 eine höhere Festigkeit an der Verdrehwinkelbegrenzung 124, was wegen der in Fig. 5 starken Annäherung des Deckbleches 92 an die Turbinenradschale 21 auch für dieses Deckblech 92 gilt. Das Deckblech 92 wird hierbei direkt an der Turbinenradschale 21 und damit am Turbinenrad 19 befestigt, und zwar mittels einer Schweißung 130. Damit ergibt sich bei Fig. 5 eine nochmals geringere Bauteileanzahl als bei der Ausführung nach Fig. 4, da die dort vorhandene separate Anbindung 110 verzichtbar ist. Die zweite Verdrehwinkelbegrenzung 152 entspricht übrigens derjenigen in Fig. 4.

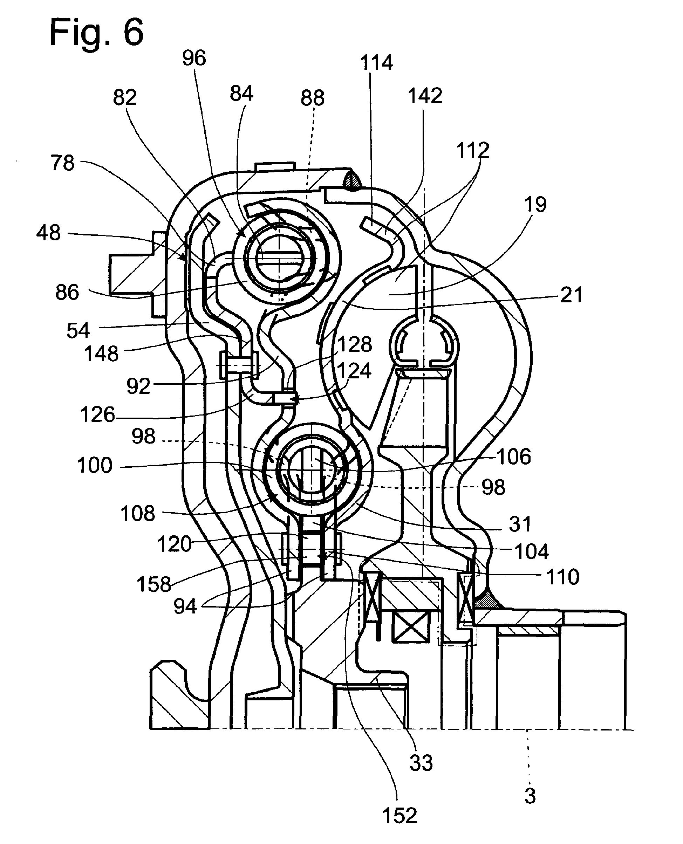

Abweichend von den Ausführungen nach Fig. 4 oder 5 ist bei Fig. 6 die Turbinenradschale 21 noch weiter nach radial innen gezogen, um radial innerhalb der zweiten Energiespeicher 100 der abtriebsseitigen Koppelvorrichtung 108 mit dem als Zwischen-Übertragungselement 94 dienenden Deckblech 92 über eine Vernietung 158 verbunden zu werden, sodass bei dieser Ausführung der Turbinenradfuß 31 im Sinne einer Anbindung 110 des Turbinenrades 19 an das Zwischen-Übertragungselement 94 wirksam ist, und die Vernietung 158 radial innerhalb der abtriebsseitigen Koppelvorrichtung 108 als Angriffsstelle 120 dient. Drüber hinaus dient die Vernietung 158 in einer Zusatzfunktion als zweite Verdrehwinkelbegrenzung 152, die ebenso wie die Verdrehwinkelbegrenzung 124 in Fig. 1 wirksam ist. Die radial äußere Verdrehwinkelbegrenzung 124 in Fig. 6 entspricht dagegen konstruktiv derjenigen in Fig. 4.

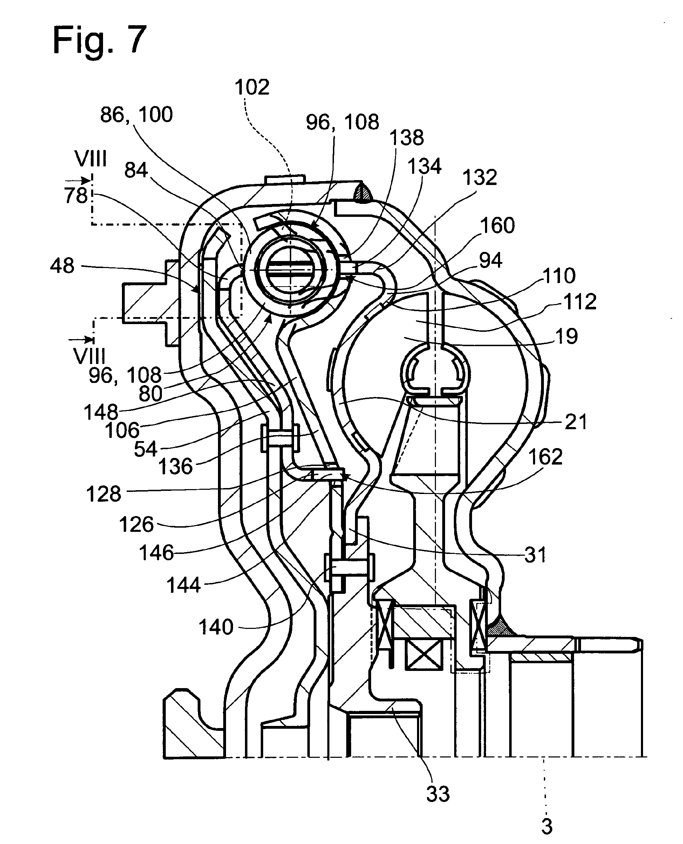

Die Fig. 7 ist im Zusammenhang mit den Fig. 8 und 9 zu betrachten. Anders als bei den bislang erläuterten Ausführungen ist die antriebsseitige Koppelvorrichtung 96 mit ihren ersten Energiespeichern 86 und die abtriebsseitige Koppelvorrichtung 108 mit ihren zweiten Energiespeichern 100 auf im Wesentlichen gleichen Radius um die Drehachse 3 der hydrodynamischen Kupplungsanordnung 1 vorgesehen. Das am Ansteuerblech 148 vorgesehene antriebsseitige Übertragungselement 78 beaufschlagt, wie Fig. 8 besser zeigt, mit seinem Ansteuerelement 84 den jeweils benachbarten ersten Energiespeicher 86 der antriebsseitigen Koppelvorrichtung 96, der sich am anderen Ende am Ansteuerelement 88 eines Ansteuervorsprunges 134 abstützt, der an einem Steuerblech 132 angeformt ist, das einstückig mit der Turbinenradschale 21 ausgebildet ist. Die Ansteuervorsprünge 134 erstrecken sich, ausgehend von dem im Wesentlichen ringförmigen Steuerblech 132, im Wesentlichen axial und durchdringen hierbei jeweils eine Aussparung 138 eines Deckbleches 136, das sowohl die ersten Energiespeicher 86 als auch die zweiten Energiespeicher 100 über einen Teil deren Umfanges umschließt. Wie aus Fig. 8 erkennbar ist, ist die jeweilige Aussparung 138 in Umfangsrichtung größer ausgebildet als der zugeordnete Ansteuervorsprung 134, sodass das Letztgenannte innerhalb der Aussparung 138 zu Relativbewegungen befähigt ist. Der Ansteuervorsprung 134 bildet gemeinsam mit der Aussparung 138 eine erste Verdrehwinkelbegrenzung 160, wirksam zwischen dem antriebsseitigen Übertragungselement 78 und dem als Zwischen-Übertragungselement 94 wirksamen Steuerblech 132.

Durch das Ansteuerelement 98 des Ansteuervorsprunges 134 ist der in Umfangsrichtung benachbarte zweite Energiespeicher 100 beaufschlagbar, der sich mit seinem entgegengesetzten Ende an Ansteuerelementen 102 des bereits erwähnten Deckbleches 136 abstützt, das folglich als abtriebsseitiges Übertragungselement 106 dient. Dieses ist mittels einer Vernietung 140 an der Turbinenradnabe 33 befestigt, während die Turbinenradschale 21 mit ihrem Turbinenradfuß 31 in Umfangsrichtung relativ gegenüber der Turbinenradnabe 33 bewegbar ist. Ergänzend bleibt festzuhalten, dass zwischen dem antriebseitigen Übertragungselement 78 und dem abtriebsseitigen Übertragungselement eine zweite Verdrehwinkelbegrenzung 162 wirksam ist, die konstruktiv der Verdrehwinkelbegrenzung 124 in Fig. 4 entspricht und den Gesamtrelativdrehwinkel des Torsionsschwingungsdämpfers vorgibt.

Auch bei dieser Ausführung ist demnach das Turbinenrad 19 als Zwischenmasse 112 wirksam, und zwar zwischen der antriebsseitigen Koppelvorrichtung 96 und der abtriebsseitigen Koppelvorrichtung 108, da bei jeder Auslenkung der Ansteuervorsprünge 134 über die Energiespeicher 86 und 100 mittels des Steuerbleches 132 eine Mitnahme des Turbinenrades 19 erfolgt. Diese Bewegung der Ansteuervorsprünge 134 wird jeweils ausgelöst durch eine Verlagerung des antriebsseitigen Übertragungselementes 78 in Umfangsrichtung und eine hierdurch bedingte Verformung der ersten Energiespeicher 86, und hat, sobald die Verlagerung der Ansteuervorsprünge 134 einsetzt, eine Verformung der zweiten Energiespeicher 100 und damit eine Auslenkung des abtriebsseitigen Übertragungselementes 106 zur Folge, das aufgrund seiner drehfesten Verbindung mit der Turbinenradnabe 33 die Bewegung über diese auf ein abtriebsseitiges Bauteil weitergibt, wie dies in Fig. 1 mit dem Bezugszeichen 116 dargestellt ist.

Bei Anordnung beider Koppelvorrichtungen 96 und 108 im radial äußeren Bereich des Torsionsschwingungsdämpfers 80 sind Varianten bezüglich der Kombination der ersten Energiespeicher 86 und der zweiten Energiespeicher 100 denkbar, wie Fig. 10 beispielhaft zeigt. Während nämlich in Fig. 8 ausschließlich Energiespeicher relativ kurzer Baulänge in Umfangsrichtung Verwendung finden, und, jeweils um 90° versetzt, Ansteuervorsprünge 134 zwischen jeweils einen ersten Energiespeicher 86 und einen zweiten Energiespeicher 100 eingreifen, sind bei der Ausführung nach Fig. 10 lediglich zwei Ansteuervorsprünge 134 vorgesehen, die zwischen die beiden entsprechenden Energiespeicher 86 und 100 eingreifen. In Umfangsrichtung dazwischen fehlen Ansteuerelemente 134, und es sind statt dessen in Umfangsrichtung erheblich längere Energiespeicher vorgesehen, die in Abhängigkeit von der gewünschten Federrate vergleichbar zum ersten Energiespeicher 86 oder zum zweiten Energiespeicher 100 realisiert sein können. Die zugeordneten Federschaltbilder in den Fig. 9 und 11 zeigen die bereits erklärten Unterschiede schematisch auf.

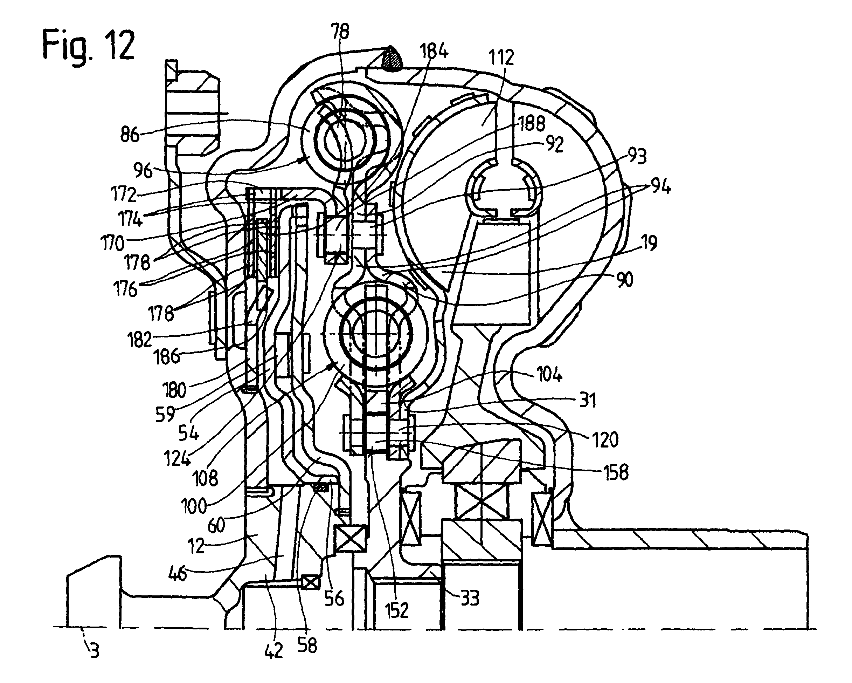

Fig. 12 zeigt eine Ausführung des Torsionsschwingungsdämpfers mit radial übereinander liegenden Koppelvorrichtungen 96, 108, wobei, ebenso wie bei der bereits behandelten Fig. 6, der Turbinenradfuß 31 des Turbinenrades 19 mittels einer Vernietung 158 am Zwischen-Übertragungselement 94 befestigt ist. Abweichend von Fig. 6 ist allerdings das Zwischen-Übertragungselement 94 nicht nur durch das Deckblech 92 gebildet, sondern verfügt zusätzlich über ein mittels eines Zapfens 93 am Deckblech 92 befestigtes, zweites Deckblech 90. Ebenso wie auch bei Fig. 6 realisiert, dient die Vernietung 158 in einer weiteren Funktion in Verbindung mit der radial inneren Nabenscheibe 104 an der Turbinenradnabe 33 als zweite Verdrehwinkelbegrenzung 152, welche die erste Verdrehwinkelbegrenzung 124 ergänzt. Die Letztgenannte funktioniert, indem ein an einem Zapfen 93 vorgesehener, aber in Fig. 12 nicht erkennbarer Zapfenvorsprung sich in Richtung zum antriebsseitigen Übertragungselement 78 erstreckt und in eine Umfangsnutung desselben mit begrenzter Umfangserstreckung eindringt.

Der wesentliche Unterschied der Ausführung gemäß Fig. 12 gegenüber derjenigen nach Fig. 6 liegt allerdings im Aufbau der Überbrückungskupplung 48. Diese weist nämlich axial zwischen einem Kupplungsdeckel 7 des Kupplungsgehäuses 5 und dem Kolben 54 zwei Lamellen 176 auf, die im radial äußeren Bereich über Verzahnungen 174 verfügen, mit welchen sie drehfest, aber axial verschiebbar, in eine Verzahnung 172 eines Haltebügels 170 eingreifen, der über eine Vernietung 188 drehfest am antriebsseitigen Übertragungselement 78 aufgenommen ist.

Die beiden Lamellen 176 tragen an beiden Axialseiten jeweils einen Reibbelag 178. Die beiden jeweils aufeinander zugewandten Reibbeläge 178 nehmen axial zwischen sich eine Zwischenlamelle 184 auf, die an ihrem radial inneren Ende über eine Verzahnung 186 verfügt, mit welcher sie in eine Verzahnung 182 einer Drehsicherung 180 eingreift, die drehfest am Gehäusedeckel 7 aufgenommen ist. Über die Verzahnungen 182, 186 ist die Zwischenlamelle 184 demnach drehfest mit dem Kupplungsgehäuse, während die Lamellen 176 aufgrund ihrer Verbindung mit dem antriebsseitigen Übertragungselement 78 eine Bewegung relativ zum Kupplungsgehäuse 5 auszuführen vermögen.

Ungeachtet dessen, ob die Reibbeläge 178, wie zuvor beschrieben, jeweils an den Lamellen 176 angebracht sind, und die Zwischenlamelle 184 reibbelagsfrei ist, oder ob die Zwischenlamelle 184 beidseits mit Reibbelägen 178 versehen ist, die benachbarten Lamellen 176 an ihren entsprechenden Axialseiten dagegen reibbelagsfrei sind, ergeben sich aufgrund der Ausführung der Überbrückungskupplung 48 gemäß Fig. 12 vier Reibflächen, sodass wesentlich höhere Drehmomente übertragbar sind als bei einer Ausführung entsprechend Fig. 6, bei welcher lediglich eine einzelne Reibfläche vorhanden ist.

Der Kolben 54 ist auf einer Zapfennabe 12 frei drehbar angeordnet, die, wie bereits in Fig. 1 gezeigt, als Strömungsdurchlass 42 dient und demnach über Kanäle 46 verfügt. Der Kolben 54 ist über seinen Kolbenfuß 56 auf einer Kolbendichtung 58 angeordnet und über Tangentialblattfedern 59 an einer Aufnahmevorrichtung 60 befestigt, die drehfest an der Zapfennabe 12 aufgenommen ist.

### Bezugszeichenliste

- 1: hydrod. Kupplungsanordnung
- 3: Drehachse
- 5: Kupplungsgehäuse
- 7: Gehäusedeckel
- 9: Pumpenradschale
- 11: Pumpenradnabe
- 12: Zapfennabe
- 13: Lagerzapfen
- 15: Befestigungsaufnahme
- 16: Flexplate
- 17: Pumpenrad
- 18: Pumpenradschaufeln
- 19: Turbinenrad
- 21: Turbinenradschale
- 22: Turbinenradschaufeln
- 23: Leitrad
- 24: hydrodyn. Kreis
- 25: Innentorus
- 26: Leitradnabe
- 27: Freilauf
- 28: Leitradschaufeln
- 29: Axiallagerung
- 30: Stützwelle
- 31: Turbinenradfuß
- 32: Verzahnung
- 33: Turbinenradnabe
- 34: Verzahnung
- 35: Axiallagerung
- 36: Getriebeeingangswelle
- 37: Mittenbohrung
- 38: Abdichtung

- 40: Übergangsraum
- 42: Strömungsdurchlass
- 44: Axiallagerung
- 46: Kanäle
- 48: Überbrückungskupplung
- 50: Kammer
- 54: Kolben
- 56: Kolbenfuß
- 58: Kolbendichtung
- 59: Tangentialblattfedern
- 60: Aufnahmevorrichtung
- 65: Lamelle
- 66: Reibbelagträger
- 68: Reibbeläge
- 69: Reibbereich
- 70: Gegenreibbereich
- 72: Verzahnungen
- 78: antriebss. Übertragungselement
- 80: Torsionsschwingungsdämpfer
- 82: radial äußere Nabenscheibe
- 84: Ansteuerelemente
- 86: erste Energiespeicher
- 88: Ansteuerelemente
- 90,92: Deckbleche
- 93: Zapfen
- 94: Zwischen-Übertragungselement
- 96: antriebss. Koppelvorrichtung
- 98: Ansteuerelement
- 100: zweite Energiespeicher
- 102: Ansteuerelemente
- 104: radial innere Nabenscheibe
- 106: abtriebss. Übertragungselement
- 108: abtriebss. Koppelvorrichtung
- 109: Schweißung
- 110: Anbindung
- 112: Masseelement
- 114: Zusatzmasse
- 116: abtriebss. Bauteil
- 118: Träger
- 120: Angriffstelle
- 122: Schweißung
- 124: Verdrehwinkelbegrenzung
- 126: Sicherungselement
- 128: Gegensicherungselement
- 130: Schweißung
- 132: Steuerblech
- 134: Ansteuervorsprünge
- 136: Deckblech
- 138: Aussparung
- 140: Vernietung
- 142: Umkantung
- 144: Schlitze
- 146: Axialvorsprünge
- 148: Ansteuerblech
- 150: Aussparungen
- 152: zweite Verdrehwinkelbegrenzung
- 154: Axialvorsprünge
- 156: Sicherungselement
- 158: Vernietung
- 160: erste Verdrehwinkelbegrenzung
- 162: zweite Verdrehwinkelbegrenzung
- 170: Haltebügel
- 172: Verzahnung am Haltebügel
- 174: Verzahnung an Lamellen
- 176: Lamelle
- 178: Reibbeläge
- 180: Drehsicherung
- 182: Verzahnung Drehsicherung
- 184: Zwischenlamelle
- 186: Verzahnung Zwischenlamellen
- 188: Vernietung

## Patentansprüche

**1.** Torsionsschwingungsdämpfer (80) an einer Überbrückungskupplung (48) einer hydrodynamischen Kupplungsanordnung (1), mit einer antriebsseitigen Koppelvorrichtung (96), die mit dem Kupplungsgehäuse (5) in Wirkverbindung bringbar und mit einem antriebsseitigen Übertragungselement (78) sowie mit ersten Energiespeichern (86) versehen ist, und mit einer abtriebsseitigen Koppelvorrichtung (108), die mit zweiten Energiespeichern (100) und mit einem abtriebsseitigen Übertragungselement (106) versehen ist, das mit einem abtriebsseitigen Bauteil (116) der hydrodynamischen Kupplungsanordnung (1) verbunden ist,
**dadurch gekennzeichnet, dass** das antriebsseitige Übertragungselement (78) über die ersten Energiespeicher (86) mit einem Zwischen-Übertragungselement (94) verbunden ist, über die zweiten Energiespeicher (100) an dem abtriebsseitigen Übertragungselement (106) angreift, wobei das Zwischen-Übertragungselement (94) an einer wirkungsmäßig zwischen den beiden Koppelvorrichtungen (96, 108) liegenden Angriffsstelle (120) über ein Masseelement (112) verfügt, und wobei das antriebsseitige Übertragungselement (78) mittels einer ersten Verdrehwinkelbegrenzung (124; 160) innerhalb eines vorbestimmten Bewegungsbereichs in Umfangsrichtung gegenüber dem Zwischen-Übertragungselement (94) bewegbar ist, und dieser ersten Verdrehwinkelbegrenzung (124; 160) eine wirkungsmäßig zwischen dem Zwischen-Übertragungselement (94) und dem abtriebsseitigen Übertragungselement (106) vorgesehene zweite Verdrehwinkelbegrenzung (152; 162) zugeordnet ist, wobei die zweite Verdrehwinkelbegrenzung (152) von der ersten Verdrehwinkelbegrenzung (124) wirkungsmäßig unabhängig ist, oder durch die zweite Verdrehwinkelbegrenzung (162) der Gesamtrelativdrehwinkel vorgegeben ist.

**2.** Torsionsschwingungsdämpfer nach Anspruch 1 mit einem zumindest durch das Turbinenrad (19) gebildeten Masseelement (112),
**dadurch gekennzeichnet, dass** das Masseelement (112) eine das Turbinenrad (19) ergänzende Zusatzmasse (114) aufweist.

**3.** Torsionsschwingungsdämpfer nach Anspruch 2,
**dadurch gekennzeichnet, dass** die Zusatzmasse (114) an dem Turbinenrad (19) vorgesehen ist.

**3.** Torsionsschwingungsdämpfer nach Anspruch 1,
**dadurch gekennzeichnet, dass** das Zwischen-Übertragungselement (94) über eine Anbindung (110) am Turbinenrad (19) angreift, welches beabstandet von der Angriffsstelle (120) das Masseelement (112) aufnimmt.

**4.** Torsionsschwingungsdämpfer nach Anspruch 1,
**dadurch gekennzeichnet, dass** bei Anordnung der ersten Energiespeicher (86) gegenüber den zweiten Energiespeichern (100) mit Radialversatz in Bezug zu einer Drehachse (3) das Zwischen-Übertragungselement (94) durch wenigstens ein Deckblech (92) gebildet ist, das über mit Radialversatz zueinander ausgebildete Ansteuerelemente (88, 98) für die Energiespeicher (86, 100) verfügt und an einer vorbestimmten Position seiner radialen Erstreckung (120) das Masseelement (112) aufnimmt.

**5.** Torsionsschwingungsdämpfer nach Anspruch 4,
**dadurch gekennzeichnet, dass** dem Deckblech (92) des Zwischen-Übertragungselementes (94) wenigstens ein zweites Deckblech (90) drehfest zugeordnet ist, das ebenfalls über mit Radialversatz zueinander ausgebildete Ansteuerelemente (88, 98) für die Energiespeicher (86, 100) verfügt, und beide Deckbleche (90, 92) sowohl ein antriebsseitiges Übertragungselement (78) als auch ein abtriebsseitiges Übertragungselement (106) axial zwischen sich aufnehmen.

**6.** Torsionsschwingungsdämpfer nach Anspruch 1,
**dadurch gekennzeichnet, dass** bei Anordnung der ersten Energiespeicher (86) und der zweiten Energiespeicher (100) auf im Wesentlichen gleichem radialen Abstand zur Drehachse (3), aber mit Umfangsversatz zueinander, das Zwischen-Übertragungselement (94) durch wenigstens ein Steuerblech (132) gebildet ist, das über Ansteuervorsprünge (134) -in Umfangsrichtung gesehen- jeweils zwischen erste Energiespeicher (86) und zweite Energiespeicher (100) greift und das Masseelement (112) aufnimmt.

**7.** Torsionsschwingungsdämpfer nach Anspruch 6,
**dadurch gekennzeichnet, dass** das Steuerblech (132) des Zwischen-Übertragungselementes (94) mit seinen Ansteuervorsprüngen (134) jeweils eine Aussparung (138) in einem als abtriebsseitiges Übertragungselement (106) wirksamen Deckblech (136) zur Überbrückung der Distanz zwischen den Energiespeichern (86, 100) und dem Turbinenrad (19) mit relativer Bewegbarkeit in Umfangsrichtung durchgreift.

**8.** Torsionsschwingungsdämpfer nach Anspruch 1,
**dadurch gekennzeichnet, dass** das antriebsseitige Übertragungselement (78) mit einem Bauteil (65) der Überbrückungskupplung (48) drehverbunden oder einstückig mit einem Bauteil (54) der Überbrückungskupplung (48) ausgebildet ist.

**9.** Torsionsschwingungsdämpfer nach Anspruch 1,
**dadurch gekennzeichnet, dass** die Verdrehwinkelbegrenzung (124) durch einen die Anbindung (110) für das Turbinenrad (19) aufnehmenden Zapfen (93) gebildet ist.

**10.** Torsionsschwingungsdämpfer nach Anspruch 1,
**dadurch gekennzeichnet, dass** die Verdrehwinkelbegrenzung (124) durch ein mit dem antriebsseitigen Übertragungselement (78) drehfestes Sicherungselement (126) und ein mit demselben in Umfangsrichtung relativ drehbar zusammenwirkendes Gegensicherungselement (128) am Zwischen-Übertragungselement (94) gebildet ist .

**11.** Torsionsschwingungsdämpfer nach Anspruch 10,
**dadurch gekennzeichnet, dass** das Sicherungselement (126) gemeinsam mit dem antriebsseitigen Übertragungselement (78) an einem mit dem Kolben (54) der Überbrückungskupplung (48) drehfesten Ansteuerblech (148) vorgesehen ist.

**12.** Torsionsschwingungsdämpfer nach Anspruch 5,
**dadurch gekennzeichnet, dass** das dem Deckblech (92) des Zwischen-Übertragungselement (94) zugeordnete, wenigstens eine drehfeste zweite Deckblech (90) den Energiespeicher (100) der abtriebsseitigen Koppelvorrichtung (108) mit einem Ansteuerelement (98) beaufschlagt, wobei das zweite Deckblech (92) mit dem Ansteuerelement (98) am radial inneren Ende der Turbinenradschale (21) des Turbinenrades (19) ausgebildet ist.

**13.** Torsionsschwingungsdämpfer nach Anspruch 1, 3 oder 4, bei welchem das Turbinenrad (19) unmittelbar an der Angriffsstelle (120) an dem Zwischen-Übertragungselement (94) befestigt ist,
**dadurch gekennzeichnet, dass** die Befestigung des Turbinenrades (19) unmittelbar an der Angriffsstelle (120) des Zwischen-Übertragungselement (94) durch eine Schweißung (130) erfolgt.

**14.** Torsionsschwingungsdämpfer nach Anspruch 1,
**dadurch gekennzeichnet, dass** das Masseelement (112) eine vom Turbinenrad (19) unabhängige Zusatzmasse (114) aufweist.

**15.** Torsionsschwingungsdämpfer nach einem der Ansprüche 1 bis 3,
**dadurch gekennzeichnet dass,** die Turbinenschale (21) des Turbinenrades (19) im radial äußeren Bereich über eine Umkantung (142) verfügt, die als Zusatzmasse (114) wirksam ist.

**16.** Torsionsschwingungsdämpfer nach einem der Ansprüche 1, 5 und 8 bis 11,
**dadurch gekennzeichnet, dass** das antriebsseitige Übertragungselement (78) drehfest mit einem Haltebügel (170) verbunden ist, der seinerseits drehfest mit zumindest einer axial zwischen dem Kolben (54) der Überbrückungskupplung (48) und dem Gehäusedeckel (7) des Kupplungsgehäuses (5) angeordneten Lamelle (176) verbunden ist.

**17.** Torsionsschwingungsdämpfer nach Anspruch 16,
**dadurch gekennzeichnet, dass** der Haltebügel (170) über eine Verzahnung (172) verfügt, in welche die Verzahnung (174) der Lamelle (176) drehfest, aber axial verlagerbar, eingreift.

**18.** Torsionsschwingungsdämpfer nach Anspruch 16 oder 17,
**dadurch gekennzeichnet, dass** der Haltebügel (170) über seine Verzahnung (172) mit den Verzahnungen (174) zumindest zweier Lamellen (176) drehfest, aber axial verlagerbar, verbunden ist, und in Achsrichtung zwischen je zwei Lamellen (176) eine Zwischenlamelle (184) vorgesehen ist, die mit einer Verzahnung (186) in eine zugeordnete Verzahnung (182) einer Drehsicherung (180) drehfest eingreift.

**19.** Torsionsschwingungsdämpfer nach Anspruch 18,
**dadurch gekennzeichnet, dass** die Drehsicherung (180) drehfest am Gehäusedeckel (7) des Kupplungsgehäuses (5) aufgenommen ist.
